# EUROPEAN PATENT APPLICATION

(11) **EP 4 836 461 A1**
(43) Date of publication of application: **04.11.2026**
(21) Application number: 24921357.0
(22) Date of filing: 05.08.2024
(51) Int. Cl.: H04W 4/80

(54) **SHELF LABEL BASE STATION**

(30) Priority: 30.01.2024 CN 202420232273 U
(71) Applicant: Hanshow Technology Co., Ltd., Jiaxing, Zhejiang 314000 (CN)
(72) Inventor: TIAN, Xiang, Jiaxing, Zhejiang 314000 (CN); YU, Mingming, Jiaxing, Zhejiang 314000 (CN); ZHAO, Jianguo, Jiaxing, Zhejiang 314000 (CN); GAO, Bo, Jiaxing, Zhejiang 314000 (CN); LIANG, Min, Jiaxing, Zhejiang 314000 (CN)
(74) Representative: Carangelo, Pierluigi
(86) International application number: PCT/CN2024/109850
(87) International publication number: WO 2025/161326

(57) **Abstract**

Provided is a shelf label base station. The shelf label base station includes a housing (13) and a shelf label communication module (11). The shelf label communication module (11) is configured to communicate with an electronic shelf label. The shelf label communication module (11) includes a first radio frequency module. The first radio frequency module is disposed inside the housing (13). The shelf label base station also includes an NFC module (12) disposed inside the housing (13).

## Description

This application claims priority to Chinese Patent Application No. 202420232273.8 filed with the China National Intellectual Property Administration (CNIPA) on Jan. 30, 2024, the disclosure of which is incorporated herein by reference in its entirety.

### TECHNICAL FIELD

The present application relates to the technical field of electronic shelf labels, for example, a shelf label base station.

### BACKGROUND

Electronic shelf labels have important applications in modern supermarkets. When electronic shelf labels are deployed in a supermarket, shelf label base stations also need to be deployed. The shelf label base station is used for communicating with the electronic shelf labels.

However, existing shelf label base stations have limited functionality, which limits the application scenarios of the shelf label base stations.

### SUMMARY

The present application provides a shelf label base station to achieve diverse functions for the shelf label base station and to expand the application scenarios of the shelf label base station.

Embodiments of the present application provide a shelf label base station. The shelf label base station includes a housing and a shelf label communication module. The shelf label communication module is configured to communicate with an electronic shelf label. The shelf label communication module includes a first radio frequency module. The first radio frequency module is disposed inside the housing.

The shelf label base station also includes a near field communication (NFC) module. The NFC module is disposed inside the housing.

Optionally, the shelf label base station also includes a positioning module disposed inside the housing.

The NFC module includes an NFC coil. Along a direction perpendicular to the top cover of the housing, the orthographic projection of the NFC coil is staggered from the orthographic projection of the positioning module.

Optionally, the positioning module includes a third antenna, and the third antenna is a positioning antenna array.

Optionally, the shelf label base station also includes a standard-format communication module. The standard-format communication module includes a second radio frequency module disposed inside the housing.

Optionally, the shelf label communication module also includes at least one first antenna, the standard-format communication module also includes at least one second antenna, and the at least one first antenna and the at least one second antenna are alternately distributed at the side wall of the housing.

Optionally, the standard-format communication module also includes at least one of a WI-FI module, a Bluetooth module, a Zigbee module, a narrow band Internet of Things (NB-IoT) module, a 2G module, a 3G module, a 4G module, or a 5G module.

Optionally, an operating mode of the shelf label communication module includes time division multiplexing, frequency division multiplexing, or code division multiplexing, and an operating mode of the standard-format communication module includes time division multiplexing, frequency division multiplexing, or code division multiplexing.

Optionally, the shelf label base station also includes a main board. The main board is disposed inside the housing. The first radio frequency module and the NFC module are integrated on the main board.

Optionally, the shelf label base station also includes a positioning module disposed inside the housing.

The positioning module is disposed between the main board and the top cover of the housing.

Optionally, the housing is a non-metallic housing.

### BRIEF DESCRIPTION OF DRAWINGS

The accompanying drawings used in the description of the embodiments will be briefly described below. The accompanying drawings described below illustrate part of the embodiments of the present application, and those of ordinary skill in the art may obtain other accompanying drawings based on the accompanying drawings described below on the premise that no creative work is done.
FIG. 1 is a diagram illustrating the structure of a shelf label base station according to an embodiment of the present application.
FIG. 2 is a diagram illustrating the structure of another shelf label base station according to an embodiment of the present application.
FIG. 3 is a top view of a shelf label base station according to an embodiment of the present application.
FIG. 4 is a side view of a shelf label base station according to an embodiment of the present application.

### DETAILED DESCRIPTION

Technical solutions in the embodiments of the present application are described in conjunction with the drawings in the embodiments of the present application. Obviously, the embodiments described below are part, not all, of the embodiments of the present application. Based on the embodiments of the present application, all other embodiments obtained by those of ordinary skill in the art without creative work are within the scope of the present application.

It is to be noted that terms such as "first" and "second" in the description, claims, and drawings of the present application are used to distinguish between similar objects and are not necessarily used to describe a particular order or sequence. It is to be understood that the data used in this manner is interchangeable where appropriate so that the embodiments of the present application described herein may also be implemented in a sequence other than those illustrated or described herein. Additionally, terms "comprising", "including", and any other variations thereof are intended to encompass a non-exclusive inclusion. For example, a process, method, system, product, or device that includes a series of steps or units not only includes the expressly listed steps or units but may also include other steps or units that are not expressly listed or are inherent to such a process, method, product, or device.

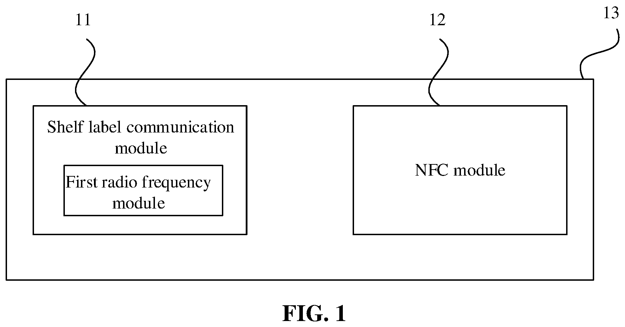

FIG. 1 is a diagram illustrating the structure of a shelf label base station according to an embodiment of the present application. With reference to FIG. 1, the shelf label base station includes a housing 13 and a shelf label communication module 11. The shelf label communication module 11 is configured to communicate with an electronic shelf label. The shelf label communication module 11 includes a first radio frequency module (not shown). The first radio frequency module is disposed inside the housing 13. The shelf label base station also includes an NFC module 12. The NFC module 12 is disposed inside the housing 13.

The shelf label base station is configured to communicate with electronic shelf labels. Each shelf label base station may communicate with all electronic shelf labels within the radiation range of a corresponding antenna. For example, the shelf label base station may obtain information, such as price information, of the electronic shelf label from an electronic shelf label. The shelf label base station may also send an instruction to the electronic shelf label. Of course, the shelf label base station may also communicate with background equipment. The background equipment interacts with the electronic shelf label through the shelf label base station. The shelf label base station performs information interaction with the electronic shelf label through the shelf label communication module 11. In the related art, the shelf label base station includes only the shelf label communication module 11 and has relatively limited functions. In this embodiment, an NFC module 12 is integrated into the shelf label base station. The NFC module 12 is configured to perform near field communication. For example, relevant information of the shelf label base station may be identified through a handheld device; alternatively, the handheld device may use the NFC module 12 to control whether the shelf label base station is powered on to operate, or the handheld device may use the NFC module 12 to control the housing of the shelf label base station to open for maintenance, and so on. The NFC module 12 is disposed inside the housing 13. The housing 13 protects the NFC module 12 from physical impact, corrosion, and so on. In the shelf label base station of this embodiment, the NFC module 12 is integrated into the station so that the shelf label base station has more functions. Users may perform more diversified control on the shelf label base station based on the NFC module 12 so that the shelf label base station achieves diversified functions, and the application scenarios of the shelf label base station are expanded.

In the technical solution of this embodiment, the shelf label base station adopted includes a housing and a shelf label communication module. The shelf label communication module is configured to communicate with an electronic shelf label. The shelf label communication module includes a first radio frequency module. The first radio frequency module is disposed inside the housing. The shelf label base station also includes an NFC module. The NFC module is disposed inside the housing. Integration of the NFC module enables the shelf label base station to have more functions. Users may perform more diversified control on the shelf label base station based on the NFC module so that the shelf label base station achieves diversified functions, and the application scenarios of the shelf label base station are expanded.

Optionally, the first radio frequency module may include, for example, a wireless transceiver unit, a power amplification unit, a low noise amplifier unit, a control unit, a storage unit, an analog-to-digital/digital-to-analog conversion unit, a baseband data processing unit, a power supply unit, and a clock unit. The operating principles of multiple units and the connection relationships among the units are well known to those skilled in the art and will not be repeated here. In addition, the shelf label communication module also includes at least one first antenna. The first radio frequency module is electrically connected to the at least one first antenna.

Optionally, the shelf label base station may include at least one shelf label communication module 11. Different shelf label communication modules 11 are responsible for performing different information interactions with an electronic shelf label. For example, one shelf label communication module 11 is responsible for monitoring whether the status of the electronic shelf label is normal, one shelf label communication module 11 is responsible for controlling the electronic shelf label to refresh a template, and one shelf label communication module 11 is responsible for monitoring an external environment to confirm whether the current channel experiences interference. Of course, the preceding different communication services may also be handled by the same shelf label communication module 11. Each shelf label communication module 11 includes at least one first antenna. When the shelf label communication module 11 includes at least two first antennas, a power divider, a radio frequency switch, or the like may be added between the first radio frequency module and the first antennas to meet a one-to-multiple requirement. It is to be noted that the operating frequency band of the shelf label communication module 11 is not limited and may be an industrial scientific medical (ISM) frequency band or a sub-1G frequency band. The operating bandwidth of the first antenna may be set according to actual application scenarios, which is not limited in this embodiment. Additionally, the shape, material, position, radiation direction, color, and the like of the first antenna are not limited. Of course, in some embodiments, if a requirement for the radiation direction of the first antenna exists, for example, if the first antenna needs to be configured to identify electronic shelf labels or other products within a circular area of equal radius below the projection of the shelf label base station, or if the first antenna needs to be configured to point to one or several specific directions, the first antenna may be set to a specific shape. The method of designing such a shape is well known to those skilled in the art.

Optionally, the at least one first antenna may take the form of a printed circuit board (PCB), a flexible printed circuit (FPC), a steel sheet, a wound wire, or the like.

Optionally, the at least one first antenna may be connected to the first radio frequency module through a coaxial line, a microstrip line, a coplanar waveguide, or the like.

Optionally, at least one of a capacitor, an inductor, a resistor, a balun, or a filter may be connected between the first radio frequency module and the at least one first antenna to achieve impedance matching.

Optionally, the shelf label communication module may improve radio frequency transmission and reception performance by incorporating a power amplifier and a low noise amplifier.

Optionally, multiple NFC modules 12 may be provided in the shelf label base station. The NFC module 12 may be a reader NFC or a tag NFC. Each NFC module 12 includes an NFC coil. In addition to the NFC coil, a reader NFC also includes a matching circuit, an electromagnetic compatibility (EMC) filter circuit, a front-end analog transceiver unit, a back-end digital control and information processing unit, a storage unit, a power supply unit, and the like. The functions of multiple units and the connection relationships among the units are well known to those skilled in the art and will not be repeated here. In addition to the NFC coil, a tag NFC also includes a matching unit, a detection unit, a front-end analog transceiver unit, a data processing control unit, a storage unit, an encryption unit, a power supply, and the like. The functions of multiple units and the connection relationships among the units are well known to those skilled in the art and will not be repeated here. The NFC module 12 supports international standards such as those of the International Organization for Standardization (ISO) and proprietary standards such as those of the NFC Forum.

Optionally, the NFC coil may take the form of a PCB, an FPC, aluminum etching, copper wire winding, or the like. In addition, ferrite may be added to improve the performance of the NFC coil.

Optionally, the NFC module also includes a matching capacitor. The matching capacitor is configured to tune the resonance point of the NFC coil to near 13.56 MHz (for example, within an error of 10%). The NFC coil may include three turns or four turns.

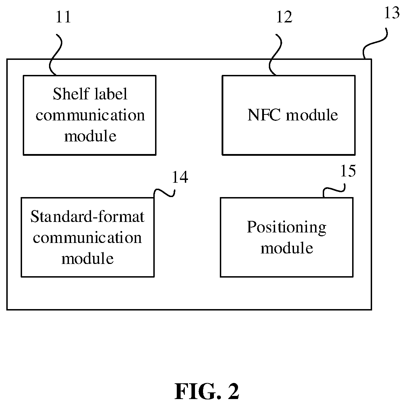

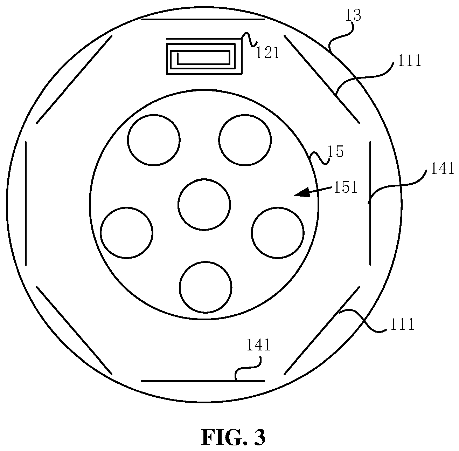

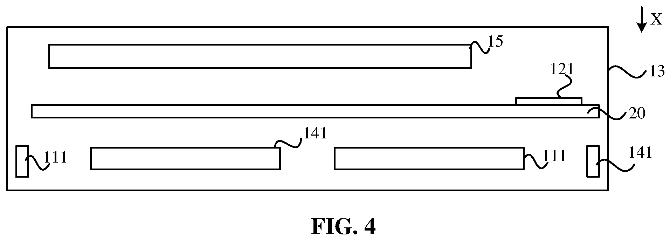

Optionally, FIG. 2 is a diagram illustrating the structure of another shelf label base station according to an embodiment of the present application, FIG. 3 is a top view of a shelf label base station according to an embodiment of the present application, and FIG. 4 is a side view of a shelf label base station according to an embodiment of the present application. With reference to FIG. 2 to FIG. 4, the shelf label base station also includes a positioning module 15. The positioning module 15 is disposed inside the housing 13. The NFC module 12 includes an NFC coil 121. Along a direction X perpendicular to the top cover of the housing 13 (that is, the thickness direction of the shelf label base station), the orthographic projection of the NFC coil 121 is staggered from the orthographic projection of the positioning module 15.

Optionally, the positioning module 15 is configured to acquire position information of the electronic shelf label, and the position information may also be sent by the shelf label base station to background equipment or a mobile device. The arrangement of the positioning module 15 makes the functions of the shelf label base station more diverse and further expands the application scenarios. The positioning module 15 includes a third antenna 151 and a third radio frequency module. The third radio frequency module includes, for example, a radio frequency switch, a radio frequency transceiver unit, an analog-to-digital/digital-to-analog conversion unit, a baseband processing control unit, a power supply, a clock unit, and a sensor. The functions of multiple units and the connection relationships are well known to those skilled in the art and will not be repeated here. The third antenna 151 is a positioning antenna array, which may be a 2.4G antenna array, an ultra-wideband (UWB) array, or an antenna array of another frequency band. The antenna array may have an integrated structure or independent structures. The shape of the antenna array may be set to match the shape of the shelf label base station. Optionally, the positioning algorithm of the positioning module 15 includes an angle-of-arrival (AOA) algorithm, a time difference of arrival (TDOA) algorithm, a time of arrival (TOA) algorithm, a received signal strength indicator (RSSI) algorithm, or the like. Optionally, the positioning algorithm of the positioning module 15 is the AOA algorithm. In this case, the antenna array is an AOA antenna array.

In the preceding embodiments, the third radio frequency module and the third antenna of the positioning module 15 are both integrated on one PCB. Antenna units in the antenna array are distributed uniformly, and the spacing between adjacent antenna units is less than half a wavelength. Through ground plane isolation, isolation between antenna units is improved. The transmission line impedance between the third radio frequency unit and the third antenna is set to 50 ohm, and the lengths of transmission lines are kept equal and as short as possible. The antenna array, with the arrangement of a radio frequency switch, opens one channel in a time-division manner so that the selected antenna unit is conducted with the third radio frequency module. In the preceding embodiments, the radiation direction of the third antenna faces the top cover of the housing 13. In other words, during use, the electronic shelf label is substantially disposed on the side of the top cover away from the third antenna. A ground plane structure is disposed in a direction opposite to the radiation direction of the third antenna. The ground plane structure is, for example, a copper layer having a shielding effect. Thus, the orthographic projection of the NFC coil is set to be staggered from the orthographic projection of the positioning module, thereby preventing the positioning module from shielding the NFC coil.

Optionally, the positioning module is disposed close to the top cover. The housing 13 is a non-metallic housing. Such an arrangement ensures that no metal obstruction exists between the positioning module 15 and the electronic shelf label, thereby reducing the occurrence of multipath interference.

Optionally, with continued reference to FIG. 2 to FIG. 4, the shelf label base station also includes a standard-format communication module 14. The standard-format communication module 14 includes a second radio frequency module. The second radio frequency module is disposed inside the housing 13.

The standard-format communication module 14 is configured to communicate with a mobile device such as a mobile phone. The standard-format communication module 14 may transmit information of the electronic shelf label acquired by the shelf label communication module to the mobile device according to an instruction from the mobile device, or send an instruction to the electronic shelf label through the shelf label communication module according to an instruction from the mobile device. The standard-format communication module 14 includes a second radio frequency module and at least one second antenna 141. The second radio frequency module is connected to the second antenna 141. The second radio frequency module may include a matching circuit, a radio frequency receiving unit, an analog-to-digital/digital-to-analog conversion unit, a digital processing and control unit, a power supply, a crystal oscillator, and the like. The functions and operating principles of multiple units are well known to those skilled in the art and will not be repeated here. In this embodiment, the standard-format communication module 14 is integrated into the shelf label base station so that the functions of the shelf label base station become more diverse, and the application scenarios are further expanded. The form of the second antenna 141 is not limited. For example, when the standard-format module 14 includes a WI-FI module, one second antenna 141 may cover all operating frequency bands of WI-FI, or multiple second antennas 141 may be combined to cover all operating frequency bands of WI-FI. In addition, technologies such as multiple-input multiple-output (MIMO) may be adopted. The operating frequency band and radiation direction of the second antenna 141 may be set according to the application scenario of the shelf label base station.

Optionally, the standard-format communication module 14 may include at least one of a WI-FI module, a Bluetooth module, a Zigbee module, an NB-IoT module, a 2G module, a 3G module, a 4G module, or a 5G module.

Optionally, the at least one second antenna 141 may take the form of a PCB, an FPC, a steel sheet, a wound wire, or the like.

Optionally, the at least one second antenna 141 may be connected to the second radio frequency module through a coaxial line, a microstrip line, a coplanar waveguide, or the like.

Optionally, at least one of a capacitor, an inductor, a resistor, a balun, or a filter may be connected between the second radio frequency module and the at least one second antenna 141 to achieve impedance matching.

Optionally, the standard-format communication module may improve radio frequency transmission and reception performance by incorporating a power amplifier and a low noise amplifier.

Optionally, when one second radio frequency module is connected to multiple second antennas 141, a combiner, a radio frequency switch, or the like may be disposed between the second radio frequency module and the second antennas 141.

Optionally, with continued reference to FIG. 2 to FIG. 4, the first antenna 111 of the shelf label communication module 11 and the second antenna 141 of the standard-format communication module 14 are distributed alternately at the side wall of the housing 13.

A relatively large number of antennas are integrated into the shelf label base station, and the multiple antennas may generate mutual interference. In this embodiment, the first antennas 111 and the second antennas 141 are arranged alternately. The distance between different first antennas 111 is relatively large, and the isolation is relatively high during simultaneous operation. The spacing between different second antennas 141 is also relatively large, and the isolation is relatively high during simultaneous operation. Therefore, the arrangement of this embodiment achieves high isolation between antennas and results in relatively weak interference during simultaneous operation. Additionally, the first antenna 111 and the second antenna 141 are relatively close to the side wall of the housing 13, that is, relatively close to the exterior of the shelf label base station, which means that the distance to the electronic shelf label is relatively short. In this manner, communication with the electronic shelf label can be performed more effectively. The first antenna 111 and the second antenna 141 are fixed on the housing 13. The first antenna 111 may be located inside the housing 13 or outside the housing 13. In addition, the second antenna 141 may be located inside the housing 13 or outside the housing 13.

Furthermore, on the basis of the preceding embodiments, the first antenna 111 and the second antenna 141 may be set to be uniformly distributed at the side wall of the housing 13.

Optionally, an operating mode of the shelf label communication module includes time division multiplexing, frequency division multiplexing, or code division multiplexing, and an operating mode of the standard-format communication module includes time division multiplexing, frequency division multiplexing, or code division multiplexing.

To avoid mutual interference among multiple antennas in the shelf label base station, time division multiplexing, frequency division multiplexing, or code division multiplexing may be employed. Of course, in some embodiments, different antennas may also be controlled to operate in different polarization modes to avoid interference.

Optionally, with reference to FIG. 4, the shelf label base station also includes a main board 20. The main board 20 is disposed inside the housing 13. The first radio frequency module and the NFC module are integrated on the main board 20.

The main board 20 may be a PCB. The NFC module is integrated as a whole on the main board. The positioning module 15 and the main board 20 are configured as independent structures. For the standard-format communication module and the shelf label communication module, respective radio frequency modules are integrated on the main board 20, while the antennas are arranged independently outside the main board 20. By providing the main board 20, the integration level of the shelf label base station can be improved, the volume of the shelf label base station can be reduced, and the cost can be lowered.

On the basis of the preceding embodiments, optionally, the positioning module 15 is disposed between the main board 20 and the top cover of the housing. That is, the main board 12 is located on the side of the positioning module 15 away from the top cover of the housing. The main board 12 does not affect the signal transmission and reception of the positioning antenna array in the positioning module 15, thereby ensuring the operational stability of the positioning module 15.

It is to be understood that multiple forms of processes shown above may be adopted with steps reordered, added, or deleted. For example, the steps described in the present application may be performed in parallel, sequentially, or in different orders, as long as the desired results of the technical solutions of the present application can be achieved, and no limitation is imposed herein.

## Claims

1. A shelf label base station, comprising a housing and a shelf label communication module, wherein the shelf label communication module is configured to communicate with an electronic shelf label, the shelf label communication module comprises a first radio frequency module, and the first radio frequency module is disposed inside the housing; and
the shelf label base station further comprises a near field communication, NFC, module, and the NFC module is disposed inside the housing.

2. The shelf label base station according to claim 1, further comprising a positioning module disposed inside the housing,
wherein the NFC module comprises an NFC coil, and along a direction perpendicular to a top cover of the housing, an orthographic projection of the NFC coil is staggered from an orthographic projection of the positioning module.

3. The shelf label base station according to claim 2, wherein the positioning module comprises a third antenna, and the third antenna is a positioning antenna array.

4. The shelf label base station according to claim 1, further comprising a standard-format communication module, wherein the standard-format communication module comprises a second radio frequency module disposed inside the housing.

5. The shelf label base station according to claim 4, wherein the shelf label communication module further comprises at least one first antenna, the standard-format communication module further comprises at least one second antenna, and the at least one first antenna and the at least one second antenna are alternately distributed at a side wall of the housing.

6. The shelf label base station according to claim 4, wherein the standard-format communication module further comprises at least one of a WI-FI module, a Bluetooth module, a Zigbee module, a narrow band Internet of Things, NB-IoT, module, a 2G module, a 3G module, a 4G module, or a 5G module.

7. The shelf label base station according to claim 4, wherein an operating mode of the shelf label communication module comprises time division multiplexing, frequency division multiplexing, or code division multiplexing, and an operating mode of the standard-format communication module comprises time division multiplexing, frequency division multiplexing, or code division multiplexing.

8. The shelf label base station according to claim 1, further comprising a main board, wherein the main board is disposed inside the housing, and the first radio frequency module and the NFC module are integrated on the main board.

9. The shelf label base station according to claim 8, further comprising a positioning module disposed inside the housing; wherein
the positioning module is disposed between the main board and a top cover of the housing.

10. The shelf label base station according to claim 1, wherein the housing is a non-metallic housing.
